# EUROPÄISCHE PATENTSCHRIFT

(11) **EP 0 848 729 B1**
(45) Veröffentlichungstag und Bekanntmachung des Hinweises auf die Patenterteilung: **25.10.2000**
(21) Anmeldenummer: 96930124.1
(22) Anmeldetag: 29.08.1996
(51) Int. Cl.: C08K 13/06, C08L 77/00

(54) **FLAMMGESCHÜTZTE PA-FORMMASSEN, ENTHALTEND MELAMINCYANURAT UND VORBEHANDELTE, FASERFÖRMIGE FÜLLSTOFFE**
FLAMEPROOF POLYAMIDE MOULDING COMPOUNDS CONTAINING MELAMINE CYANURATE AND PRETREATED FIBROUS FILLERS
MATIERES MOULABLES IGNIFUGEES EN POLYAMIDE RENFERMANT DU MELAMINE CYANURATE ET DES CHARGES FIBREUSES PRETRAITEES

(30) Priorität: 05.09.1995 DE 19532720
(43) Veröffentlichungstag der Anmeldung: 24.06.1998
(60) Teilanmeldung: 99104954.5
(73) Patentinhaber: BASF AKTIENGESELLSCHAFT, 67056 Ludwigshafen (DE)
(72) Erfinder: GAREISS, Brigitte, D-67271 Obersülzen (DE); GÖRRISSEN, Heiner, D-67069 Ludwigshafen (DE); ULMERICH, Karlheinz, D-67316 Carlsberg (DE); LAUKE, Harald, D-68165 Mannheim (DE)
(86) Internationale Anmeldenummer: EP9603792
(87) Internationale Veröffentlichungsnummer: WO9709377

(56) Entgegenhaltungen:
- EP-A- 0 241 702
- EP-A- 0 500 190
- US-A- 4 552 912
- US-A- 4 789 698
- US-A- 5 482 985

## Beschreibung

Die Erfindung betrifft flammgeschützte thermoplastische Formmassen bestehend aus
A) 40-98 Gew.-% eines thermoplastischen Polyamids
B) 1-40 Gew.-% Melamincyanurat
C) 1-50 Gew.-% einer mit einer Silanverbindung vorbehandelten Glasfaser mit einer mittleren arithmethischen Faserlänge (d₅₀-Wert)von 70 bis 200 µm und einem d₁₀-Wert kleiner gleich 60 µm, einem d₉₀-Wert kleiner gleich 350 µm
D) 0-30 Gew.-% weiterer Zusatzstoffe und Verarbeitungshilfsmittel
wobei die Gewichtsprozente der Komponenten A) bis D) 100 % ergeben.

Außerdem betrifft die Erfindung die Verwendung der erfindungsgemäßen Formmassen zur Herstellung von Formkörpern jeglicher Art und die hierbei erhältlichen Formkörper.

Aus der JP-A 53/ 051 250 sind flammgeschützte PA-Formmassen bekannt, welche Melamincyanurat und Füllstoffe enthalten. Diese werden hergestellt, indem die Polymerisation der amidbildenden Monomeren in Gegenwart der Füllstoffe und des Flammschutzmittels durchgeführt wird. Weiterhin sind aus der JP-A 54/ 016 565 füllstoffhaltige PA-Formmassen mit Melamincyanurat bekannt, wobei die mineralischen Füllstoffe vorzugsweise ein L/D Verhältnis von 4-1/4 aufweisen sollen. Zusätzlich ist aus der JP-A/ 118 454 bekannt, daß Mischungen von Melamin mit Cyanursäure in Polyamid eine flammfeste Wirkung zeigen, wobei diese Mischungen auch Füllstoffe enthalten können.

Derartige Formmassen weisen den Nachteil auf, daß die mechanischen Eigenschaften wie Steifigkeit und Festigkeit nicht ausreichend sind. Der Zusatz von Glasfasern zu PA-Mischungen mit Melamincyanurat verbessert zwar die mechanischen Eigenschaften, jedoch werden die Flammschutzeigenschaften nachteilig beeinflußt, da Glasfasern durch den sog. Dochteffekt den Flammschutz drastisch verschlechtern.

Entsprechend ist aus der EP-A 241 702 bekannt, daß PA-Mischungen aus Glasfasern mit Melamincyanurat in ihrem Flammschutzverhalten verbessert werden können, indem ungeschlichtete Kurzglasfasern in der Mischung verwendet werden.

Aus der EP-A 614 933 sind Mischungen aus Magnesiumhydroxid und Melamincyanurat für Polyamide bekannt.

Die Klassifizierung V-O nach UL 94 wird bei den bekannten Formmassen nur bei hohen Gehalten an Flammschutzmittel insgesamt erreicht, zudem sind die Nachbrennzeiten bei der Glühdrahtprüfung bei manchen Anwendungen wesentlich. Die Französische Norm NF F 16-101 fordert Nachbrennzeiten, welche kleiner/gleich 2 Sekunden betragen. Dies erfüllen die bekannten Formmassen weitestgehend nicht.

Bei allen genannten Patenten werden Glasfasern, soweit überhaupt verwendet, als konventionelle Endlosfasern (Rovings) oder Schnittfasern (4-6 mm lange Faserbündel) eingesetzt. Durch Scherung im Extruder ergibt sich dann die Glasfaserlängenverteilung im Produkt, die zwar nicht erwähnt ist, bei üblicher Verarbeitung aber bei ca. 250-300 µm liegt (bezogen auf ein Produkt mit 25 % Glasfasergehalt). Dabei ist zu berücksichtigen, daß die mittlere Faserlänge (bei gegebener Verarbeitung) im allgemeinen mit zunehmendem Faseranteil sinkt, da es zu erhöhten Faser-Wechselwirkungen in der Einarbeitungszone und damit zu vermehrtem Faserbruch kommt (F. Raumsteiner, R. Theysohn, Comp. Sci. Techn. 23 (1985) 231) .

Aufgabe der vorliegenden Erfindung war es daher, flammgeschützte thermoplastische Formmassen zur Verfügung zu stellen, welche gute mechanische Eigenschaften und einen guten Flammschutz aufweisen sollen. Insbesondere sollte der Zusatz von geschlichteten sehr kurzen Glasfasern einen Flammschutz ermöglichen, welcher möglichst geringe Nachbrennzeiten bei der Glühdrahtprüfung ermöglicht.

Demgemäß wurden die eingangs definierten Formmassen gefunden. Bevorzugte Ausführungsformen sind den Unteransprüchen zu entnehmen.

Überraschenderweise wurde gefunden, daß die Verwendung besonders kurzer Glasfasern, insbesondere mit einer bestimmten Glasfaserlängenverteilung, im Produkt, zu einem nur geringen, aber vertretbaren - Rückgang der mechanischen Eigenschaften (Steifigkeit, Festigkeit) führen, aber zu einer deutlich verbesserten Verarbeitbarkeit und Flammschutz. Dies steht im Widerspruch zur normalen Spritzgußverarbeitung, da in diesem Bereich der Faserlänge praktisch keine Veränderung sowohl der Mechanik oder des Flammschutzes festgestellt wird (erst bei >1 mm wird die Fließfähigkeit schlechter. Deshalb geht man üblicherweise bei Spritzgußprodukten allenfalls einen Kompromiß zwischen mechanischen Eigenschaften (steigen mit Faserlänge) und Isotropie (sinkt mit Faserlänge) ein, fordert aber meist eine möglichst hohe Faserlänge.

Neben dem Einsatz der Kurzglasfasern ist es im Prinzip auch möglich, kurze Fasern durch hohe Scherung im Extruder herzustellen.

Als Komponente A) enthalten die erfindungsgemäßen Formmassen 40 bis 98, bevorzugt 40 bis 87 und insbesondere 60 bis 85 Gew.-% eines thermoplastischen Polyamids.

Die Polyamide der erfindungsgemäßen Formmassen weisen im allgemeinen eine relative Viskosität ηᵣₑₗ von 1,7 bis 5,0 auf, bestimmt in einer 1 gew.-%-igen Lösung in 96 gew.%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Derartige teilaromatische, teilkristalline Copolyamide sind aufgebaut aus:
A₁) 20 - 90 Gew.-% Einheiten, die sich von Terephthalsäure und Hexamethylendiamin ableiten,
A₂) 0 - 50 Gew.-% Einheiten, die sich von ε-Caprolactam ableiten und
A₃) 0 - 80 Gew.-% Einheiten, die sich von Adipinsäure und Hexamethylendiamin ableiten,
A₄) 0 - 40 Gew.-% weiteren polyamidbildenden Monomeren,
wobei der Anteil der Komponente (A₂) oder (A₃) oder (A₄) oder deren Mischungen mindestens 10 Gew.-% beträgt.

Die Komponente A1) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten A₁) und 20 bis 50, vorzugsweise 25 bis 40 Gew.-% Einheiten, die sich von ε-Caprolactam ableiten (Einheiten A₂)) enthalten, erwiesen.

Neben den vorstehend beschriebenen Einheiten A₁) bis A₃) können die teilaromatischen Copolyamide in Mengen bis 40, vorzugsweise 10 - 30 Gew.-% und insbesondere 20 - 30 Gew.-% an weiteren polyamidbildenden Monomeren A₄) enthalten; wie sie von anderen Polyamiden bekannt sind.

Aromatische Dicarbonsäuren A₄) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure, Phenoxyterephthalsäure, wobei Isophthalsäure besonders bevorzugt sind.

Weitere polyamidbildende Monomere A₄) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:
A₁) 65 bis 85 Gew.-% Einheiten, die sich von Terephthalsäure und Hexamethylendiamin ableiten und
A₄) 15 bis 35 Gew.-% Einheiten, die sich von Isophthalsäure und Hexamethylendiamin ableiten
oder
A₁) 50 bis 70 Gew.-% Einheiten, die sich von Terephthalsäure und Hexamethylendiamin ableiten und
A₃) 10 bis 20 Gew.-% Einheiten, die sich von Adipinsäure und Hexamethylendiamin ableiten und
A₄) 20 bis 30 Gew.-% Einheiten, die sich von Isophthalsäure und Hexamethylendiamin ableiten.

Enthält die Komponente (A₄) symmetrische Dicarbonsäuren, bei denen die Carboxylgruppen in para-Stellung stehen, so empfiehlt es sich, diese mit (A₁) und (A₂) oder (A₁) und (A₃) als ternäre Copolyamide aufzubauen, da andernfalls das Copolyamid einen zu hohen Schmelzpunkt aufweist und nur unter Zersetzung schmilzt, was nicht wünschenswert ist.

Enthält die Komponente A₄) cyclische aliphatische Diamine als Polyamidbausteine, so sind hierbei insbesondere als Diaminkomponenten Bis(4-aminocyclohexyl)-methan, Bis(4-amino-3-methylcyclohexyl)methan, Bis(4-aminocyclohexyl)-2,2-propan, bis(4-amino-3-methylcyclohexyl)-2,2-propan, Cyclohexandiamin und Isophorondiamin bevorzugt. Derartige teilaromatische, teilkristalline Polyamide werden in der DE-A 44 04 250 beschrieben.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Die Herstellung der bevorzugten teilaromatischen Copolyamide mit niedrigem Triamingehalt kann nach den in den EP-A 129 195 und 129 196 beschriebenen Verfahren erfolgen.

Als Komponente B) enthalten die erfindungsgemäßen thermoplastischen Formmassen 1 bis 40, bevorzugt 3 bis 30, und insbesondere 5 bis 25 Gew.-% Melamincyanurat als Flammschutzmittel.

Das gemäß der Erfindung (Komponente B) verwendete Melamincyanurat ist ein Reaktionsprodukt aus vorzugsweise äquimolaren Mengen von Melamin (Formel I) und Cyanursäure bzw. Isocyanursäure (Formeln IIa und IIb)

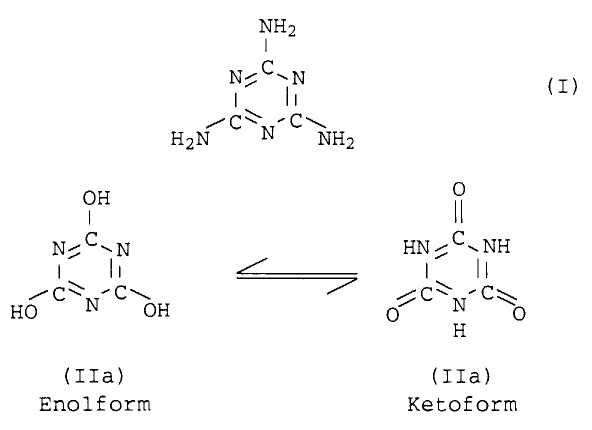

Man erhält es z.B. durch Umsetzung von wäßrigen Lösungen der Ausgangsverbindungen bei 90 bis 100°C. Das im Handel erhältliche Produkt ist ein weißes Pulver mit einer mittleren Korngröße d₅₀ von 7 bis 1,5 µm.

Als Komponente C) enthalten die erfindungsgemäßen Polyamidformmassen 1 bis 50, bevorzugt 10 bis 35 und insbesondere 15 bis 30 Gew.-% einer Glasfaser mit einer mittleren arithmetischen Faserlänge von 70 bis 200 µm, bevorzugt 80 bis 180 µm und insbesondere 100 bis 150 µm und einem d₁₀-Wert kleiner gleich 60 µm sowie einem d₉₀-Wert kleiner gleich 350 µm. Der mittlere Durchmesser beträgt im allgemeinen von 3 bis 30 µm, bevorzugt von 8 bis 20 µm und insbesondere 10 bis 14 µm.

Als bevorzugte Glasfaser sei E-Glas genannt.

Die gewünschte Faserlänge kann z.B. durch Mahlen in einer Kugelmühle eingestellt werden, wobei eine Faserlängenverteilung entsteht.

Die Reduzierung der Faserlänge führt, wenn die mittlere Faserlänge <200 µm ist, zu einem rieselfähigen Schüttgut, das wie ein Pulver in das Polymer eingemischt werden kann. Aufgrund der geringen Faserlänge tritt beim Einarbeiten nur noch eine geringe weitere Verkürzung der Faserlänge ein.

Der Fasergehalt wird üblicherweise nach Veraschen des Polymeren bestimmt. Zur Bestimmung der Faserlängenverteilung wird im allgemeinen der Ascherückstand in Silikonöl aufgenommen und bei 20-facher Vergrößerung des Mikroskops fotografiert. Auf den Bildern können bei mindestens 500 Fasern die Länge ausgemessen und der arithmetische Mittelwert (d₅₀) daraus berechnet werden.

Bevorzugt beträgt der d₅₀-Wert kleiner gleich 180, vorzugsweise kleiner gleich 160 und insbesondere kleiner gleich 150 µm. Gleichzeitig mit der Bestimmung des d₅₀ Wertes können auch die d₁₀- und d₉₀-Werte der Glasfaserlängenverteilung bestimmt werden. Der d₁₀-Wert bedeutet hierbei, daß 10 % der Glasfasern der Probe eine Länge x aufweisen. Für die vorliegenden erfindungsgemäßen Formmassen haben sich d₁₀-Werte kleiner gleich 60 µm, vorzugsweise kleiner gleich 55 µm und d₉₀ Werte kleiner gleich 350 µm, vorzugsweise kleiner gleich 290 µm als vorteilhaft erwiesen.

Die Glasfasern sind zur besseren Verträglichkeit mit dem thermoplastischen Polyamid mit einer Silanverbindung oberflächlich vorbehandelt.

Geeignete Silanverbindungen sind solche der allgemeinen Formel III

(X-CH₂)ₙ)_{K}-Si-(O-CₘH₂ₘ₊₁)_{4-K} III

in der die Substituenten folgende Bedeutung haben:
- x: 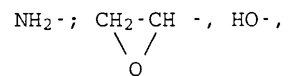
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im allgemeinen in Mengen von 0,05 bis 5, vorzugsweise 0,5 bis 1,5 und insbesondere 0,8 bis 1 Gew.-% (bezogen auf C) zur Oberflächenbeschichtung eingesetzt.

Neben den wesentlichen Komponenten A), B) und C) können die erfindungsgemäßen Formmassen übliche Zusatzstoffe und Verarbeitungshilfsmittel D) enthalten. Deren Anteil beträgt in der Regel bis zu 30 Gew.-% vorzugsweise bis zu 10 Gew.-%, bezogen auf das Gesamtgewicht der Komponenten.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe, Pigmente und Weichmacher sowie schlagzähmodifizierende Polymere (Kautschuke).

Oxidationsverzögerer und Wärmestabilisatoren, die den thermoplastischen Massen gemäß der Erfindung zugesetzt werden können, sind z.B Halogenide, ausgewählt aus der Gruppe von Metallen der Gruppe I des Periodensystems, z.B. Lithium-, Natrium-, Kalium-Halogenide, und Kupfer-(I)-Halogenide, z.B. Chloride, Bromide oder Iodide, oder Mischungen davon. Ferner kann man sterisch gehinderte Phenole, sekundäre, aromatische Amine, Hydrochinone, substituierte Vertreter dieser Gruppe und Mischungen dieser Verbindungen, vorzugsweise in Konzentration bis zu 1 Gew.-%, bezogen auf das Gewicht der Mischung, einsetzten.

Beispiele für UV-Stabilisatoren sind substituierte Resorcine, sterisch gehinderte Phenole, Salicylate, Benzotriazole und Benzophenone, die man im allgemeinen in Mengen bis zu 2 Gew.-% einsetzen kann.

Gleit- und Entformungsmittel, die man in der Regel bis zu 1 Gew.-% der thermoplastischen Masse zusetzen kann, sind, beispielsweise langkettige Fettsäuren oder deren Derivate wie Stearinsäure, Stearylalkohol, Stearinsäurealkylester und -amide sowie Ester des Pentaerythrits mit langkettigen Fettsäuren.

Weiterhin können organische Farbstoffe wie Nigrosin, Pigmente wie Titandioxid, Cadmiumsulfid, Cadmiumselenid, Phthalocyanine, Ultramarinblau und Ruß als Farbstoffe zugesetzt werden.

Als Keimbildungsmittel können Natriumphenylphosphinat, Aluminiumoxid, Siliziumdioxid, Nylon 22 sowie bevorzugt Talkum eingesetzt werden, üblicherweise in Mengen bis zu 1 Gew.-%.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt. Die Mengen betragen üblicherweise bis zu 15 Gew.-%.

Die Herstellung der erfindungsgemäßen Formmassen kann nach an sich bekannten Verfahren erfolgen. Nach einer bevorzugten Ausführungsform erfolgt die Herstellung durch Zugabe der Komponente B) sowie C), zur Schmelze der Komponente A).

Zweckmäßigerweise verwendet man hierzu Extruder, z.B. Einschnekken- oder Zweischneckenextruder oder andere herkömmliche Plastifizierungsvorrichtungen wie Brabender-Mühlen oder Banbury-Mühlen.

Die Kunststoffmischungen kann man danach einer weiteren thermischen Behandlung, d.h. einer Nachkondensation in fester Phase unterwerfen. In Temperaggregaten wie z.B. einem Taumler-Mischer oder kontinuierlich sowie diskontinuierlich betriebenen Temperrohren tempert man die in der jeweiligen Bearbeitungsform vorliegende Formmasse, bis die gewünschte Viskositätszahl VZ oder relative Viskosität ηrel des Polyamids erreicht wird. Der Temperaturbereich der Temperung hängt vom Schmelzpunkt der reinen Komponente A) ab. Bevorzugte Temperaturbereiche sind 5 bis 50, vorzugsweise 20 bis 30°C unterhalb des jeweiligen Schmelzpunkts von A). Das Verfahren erfolgt vorzugsweise in einer Inertgasatmosphäre, wobei Stickstoff und überhitzter Wasserdampf als Inertgase bevorzugt sind.

Die Verweilzeiten betragen im allgemeinen von 0,5 bis 50, vorzugsweise 4 bis 20 Stunden. Anschließend werden aus den Formmassen mittels üblicher Vorrichtungen Formteile hergestellt.

In einer anderen bevorzugten Herstellweise der erfindungsgemäßen Formmassen werden die Komponenten A) und C) konfektioniert, wobei die Menge von C) größer 40 Gew.-% (bezogen auf A) und C), bevorzugt größer 45 Gew.-%) beträgt (Batch). Dieses Konzentrat (Batch) wird anschließend mit A) und B) sowie gegebenenfalls D) in geeigneten Mischvorrichtungen konfektioniert.

Die erfindungsgemäßen Formmassen zeichnen sich durch eine gute Verarbeitbarkeit sowie durch eine gute Flammfestigkeit in Kombination mit einem guten mechanischen Eigenschaftsprofil aus. Deshalb eignen sie sich zur Herstellung von Fasern, Folien und Formkörpern jeglicher Art, welche insbesondere im Elektrobereich als Leitungsschutzschalter, Hilfsschalter, Schaltschütze und Steckverbinder verwendet werden.

### Beispiele

Es wurden folgende Komponenten eingesetzt:
Komponente A:
   - A1:: Poly-ε-Caprolactam mit einer Viskositätszahl VZ von 145 ml/g gemessen als 0,5 %ige Lösung in 96 gew.-%iger H₂SO₄ bei 25°C; Ultramid® B3 der BASF AG.
   - A2:: PA66 mit einer VZ von 151 ml/g, Ultramid® A3 der BASF AG.
Komponente B: Melamincyanurat mit einer mittleren Teilchengröße von 1,5 µm.
Komponente C:
   - C1:: gemahlene Glasfaser (E-Glas), Durchmesser 14 µm, Aminosilan-Schlichte.
   - C2:: gemahlene Glasfaser (E-Glas) Durchmesser 14 µm, nicht silanisiert.
   - C3:: Schnittglasfaser, Durchmesser 14 µm, Faserlänge 6000 µm, Aminosilan-Schlichte
   - C4:: Schnittglasfaser: Durchmesser 14 µm, Faserlänge: 3,5 cm; Aminosilan-Schlichte
   - C5:: Magnesiumhydroxid mit Aminosilanschlichte (Magnifin® H10B der Martinswerke GmbH).

### Herstellung der Formmassen

### Beispiele 1 bis 3 und Vergleichsbeispiele 1* bis 4*

Die Komponenten A, Melamincyanurat und die jeweilige Komponente C (siehe Tabelle) wurden auf einem Zweischneckenextruder (ZSK 40 Werner & Pfleiderer) bei 120 U/min und einem Durchsatz von 20 kg/h konfektioniert (Verarbeitungstemperaturen: A1 = 260°C; A2 = 280°C). Die Mischung wurde verstrangt, im Wasserbad gekühlt, granuliert und im Vakuum bei 80°C für 10 Std getrocknet.

### Beispiel 4

PA6 (Komponente A1) wurde bei 260°C mit 50 Gew.-% C4 unter obigen Bedingungen konfektioniert gekühlt, granuliert und getrocknet. 40 Gew.-% dieses Batches (Konzentrat) wurden mit PA6 und Melamincyanurat erneut im Extruder bei 260°C geschmolzen, innig vermischt, gekühlt, granuliert und getrocknet.

Bestimmung der mittleren Glasfaserlänge und der Glasfaserlängenverteilung im erhaltenen Granulat:

Eine 10 g Probe wurde bei 600°C 10 Minuten verascht, der Rückstand in Silikonöl aufgenommen und von der Emulsion 1 Tropfen auf einen Objektträger gebracht und mit 20facher Vergrößerung fotografiert. Flächendeckend wurden mit einem Bildanalysegerät (IBAS 2000 der Firma Kontron) 15 Bilder gescannt (ca. 2000 Fasern). Anschließend wurden durch ein automatisches Auswerteprogramm die 15 Bilder ausgezählt und die d₁₀, d₅₀ sowie d₉₀ Werte der Glasfaserlängenverteilung berechnet.

Die Formmassen wurden auf unser Spritzgußmaschine zu Prüfkörpern bei 260°C verarbeitet. An diesen Prüfkörpern wurden folgende Messungen durchgeführt:

Die Zugfestigkeit wurde nach DIN 53455, der E-Modul nach DIN 53457, Die Reißdehnung nach DIN 53455 und die Schlagzähigkeit nach ISO 179/eU bestimmt. Die Glühdrahtprüfung erfolgte nach IEC 695-21 wobei die Angaben 1,2 bzw. 3 mm der Stärke des Prüfkörpers entsprechen. Die Brandprüfung nach UL-94 erfolgte am 1/16"-Brandstab.

Die Zusammensetzungen der Formmassen und die Ergebnisse der Messungen sind der Tabelle zu entnehmen.

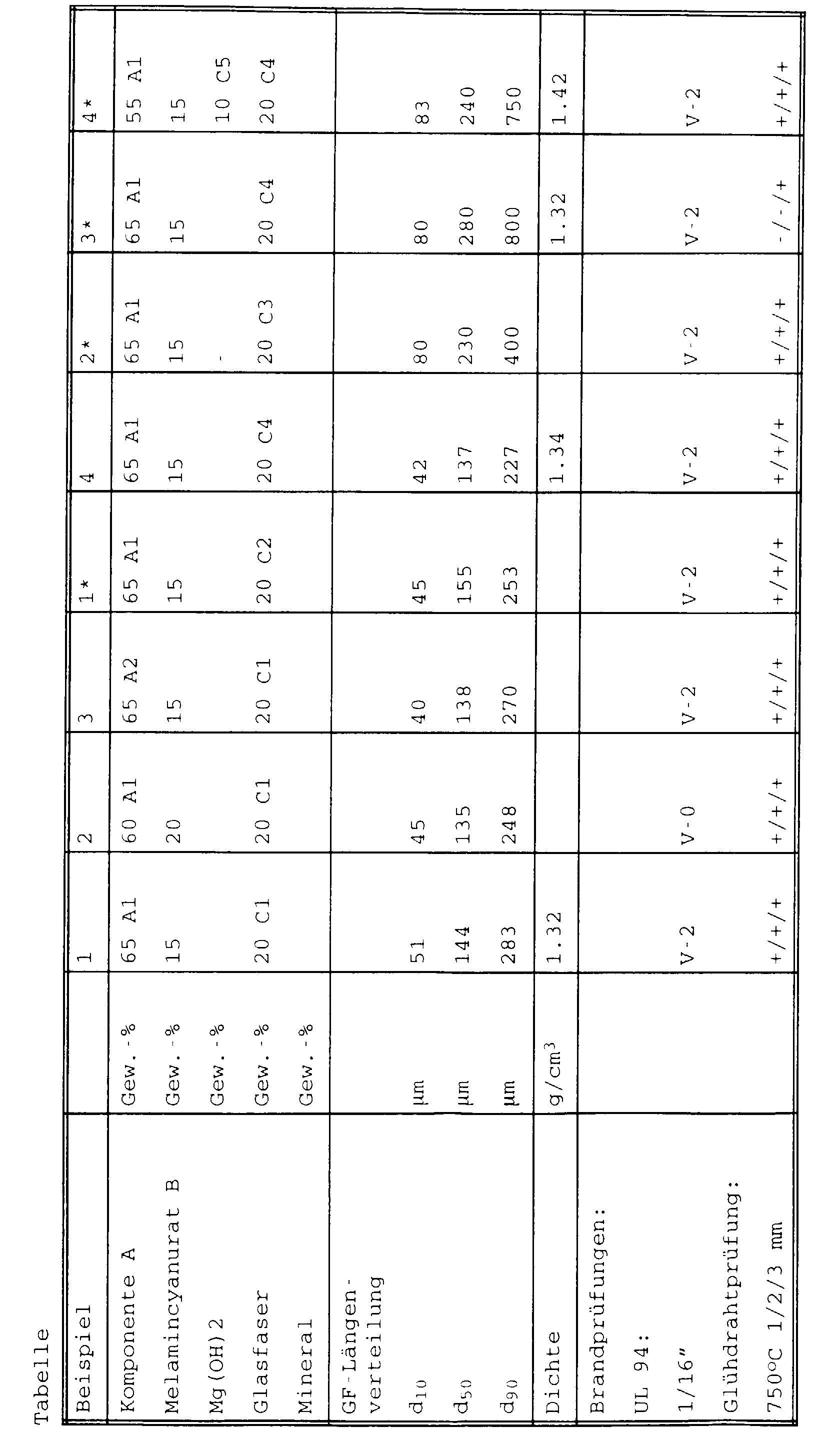

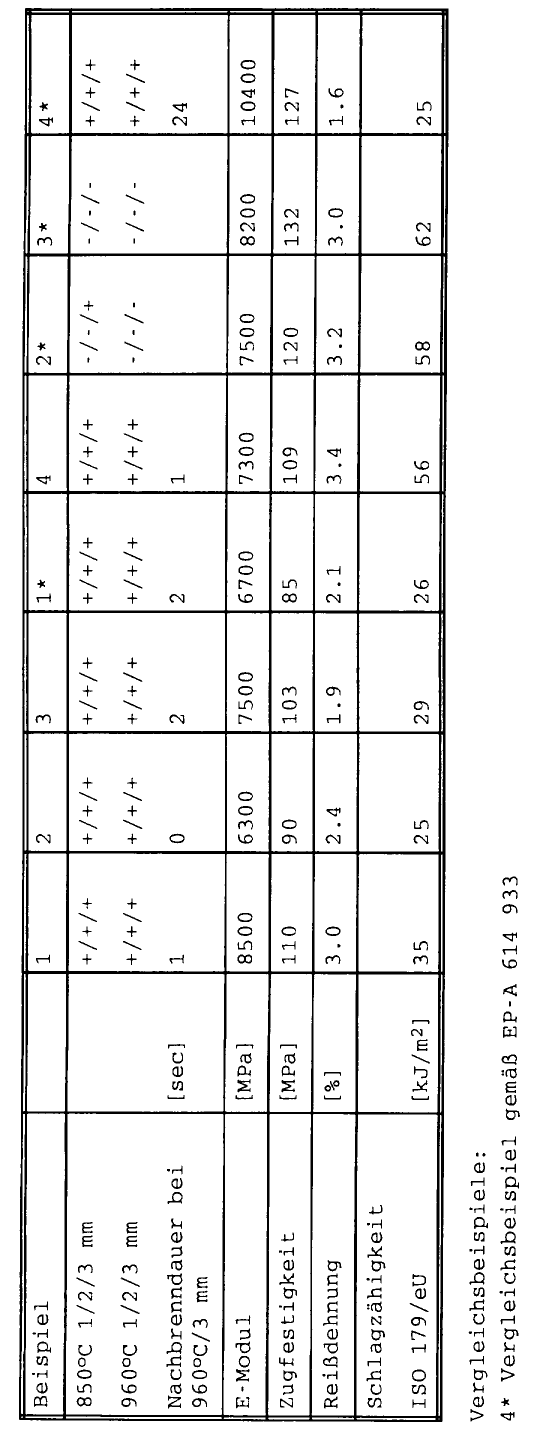

## Patentansprüche

1. Flammgeschützte thermoplastische Formmassen, bestehend aus
A) 40 bis 98 Gew.-% eines thermoplastischen Polyamids
B) 1 bis 40 Gew.-% Melamincyanurat
C) 1 bis 50 Gew.-% einer mit einer Silanverbindung vorbehandelten Glasfaser mit, einer mittleren arithmethischen Faserlänge (d₅₀-Wert) von 70 bis 200 µm und einem d₁₀-Wert kleiner gleich 60 µm, einem d₉₀-Wert kleiner gleich 350 µm
D) 0 bis 30 Gew.-% weiterer Zusatzstoffe und Verarbeitungshilfsmittel
wobei die Gewichtsprozente der Komponenten A) bis D) 100 % ergeben.

2. Flammgeschützte thermoplastische Formmassen nach Anspruch 1, in denen die Glasfaser aus E-Glas aufgebaut ist.

3. Flammgeschützte thermoplastische Formmassen nach den Ansprüchen 1 oder 2, in denen die mittlere arithmetische Faserlänge der Komponente C) (d₅₀-Wert) 80 bis 180 µm beträgt.

4. Flammgeschützte thermoplastische Formmassen nach den Ansprüchen 1 bis 3, in denen der Durchmesser der Glasfaser 3-30 µm beträgt.

5. Flammgeschützte thermoplastische Formmassen nach den Ansprüchen 1 bis 4, wobei die Silanverbindungen solche der allgemeinen Formel I sind
(X-CH₂)ₙ)_{K}-Si-(O-CₘH₂ₘ₊₁)_{4-K} I
in der die Substituenten folgende Bedeutung haben:
x 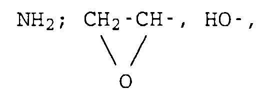
n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

6. Flammgeschützte, thermoplastische Formmassen nach den Ansprüchen 1 bis 4, in welchen die Komponente C) eine Glasfaserlängenverteilung mit einem d₁₀-Wert kleiner gleich 60 µm, d₅₀-Wert kleiner gleich 180 µm und einem d₉₀-Wert kleiner gleich 350 µm aufweist.

7. Verwendung der flammgeschützten thermoplastischen Formmassen gemäß den Ansprüchen 1 bis 6 zur Herstellung von Fasern, Folien und Formkörpern.

## Claims

1. A flame-retardant thermoplastic molding composition composed of
A) from 40 to 98% by weight of a thermoplastic polyamide
B) from 1 to 40% by weight of melamine cyanurate
C) from 1 to 50% by weight of a glass fiber which is pretreated with a silane compound and whose arithmetic mean fiber length (d₅₀) is from 70 to 200 µm and which has a d₁₀ less than or equal to 60 µm and a d₉₀ less than or equal to 350 µm,
D) from 0 to 30% by weight of other additives and processing aids
where the total of the percentages by weight of components A) to D) is 100%.

2. A flame-retardant thermoplastic molding composition as claimed in claim 1, in which the glass fiber is composed of E glass.

3. A flame-retardant thermoplastic molding composition as claimed in claim 1 or 2, in which the arithmetic mean fiber length of component C) (d₅₀) is from 80 to 180 µm.

4. A flame-retardant thermoplastic molding composition as claimed in any of claims 1 to 3, in which the diameter of the glass fiber is from 3 to 30 µm.

5. A flame-retardant thermoplastic molding composition as claimed in any of claims 1 to 4, where the silane compound has the formula I
(X-CH₂)ₙ)_{K}-Si-(O-CₘH₂ₘ₊₁)_{4-K} I
where the substituents are as follows:
X is 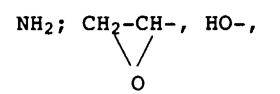
n is an integer from 2 to 10, preferably 3 or 4
m is an integer from 1 to 5, preferably 1 or 2
k is an integer from 1 to 3, preferably 1.

6. A flame-retardant thermoplastic molding composition as claimed in any of claims 1 to 4, in which component C) has a distribution of glass-fiber lengths having a d₁₀ of less than or equal to 60 µm, a d₅₀ of less than or equal to 180 µm and a d₉₀ of less than or equal to 350 µm.

7. Use of the flame-retardant thermoplastic molding compositions as claimed in any of claims 1 to 6 to produce fibers, films or moldings.

## Revendications

1. Masses de moulage thermoplastiques ignifugées, constituées
A) de 40 à 98% en poids d'un polyamide thermoplastique,
B) de 1 à 40% en poids de cyanurate de mélamine,
C) de 1 à 50% en poids d'une fibre de verre prétraitée par un composé de silane présentant une longueur de fibre arithmétique moyenne (valeur de d₅₀) de 70 à 200 µm et une valeur de d₁₀ inférieure ou égale à 60 µm, et une valeur de d₉₀ inférieure ou égale à 350 µm,
D) de 0 à 30% en poids d'autres additifs et agents auxiliaires de traitement,
les % en poids des composants A) à D) représentant 100%.

2. Masses de moulage thermoplastiques ignifugées suivant la revendication 1, dans lesquelles les fibres de verre sont constituées de verre non alcalin (verre E).

3. Masses de moulage thermoplastiques ignifugées suivant l'une des revendications 1 et 2, dans lesquelles la longueur de fibre arithmétique moyenne du composant C) (valeur de d₅₀) est de 80 à 180 µm.

4. Masses de moulage thermoplastiques ignifugées suivant l'une des revendications 1 à 3, dans lesquelles le diamètre des fibres de verre est de 3-30 µm.

5. Masses de moulage thermoplastiques ignifugées suivant l'une des revendications 1 à 4, dans lesquelles les composés de silane sont ceux de la formule générale I :
(X-CH₂)ₙ)ₖ-Si-(O-CₘH₂ₘ₊₁)₄₋ₖ (I)
dans laquelle les substituants ont les significations suivantes:
X représente 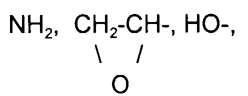
n est un nombre entier de 2 à 10, de préférence de 3 à 4,
m est un nombre entier de 1 à 5, de préférence de 1 à 2,
k est un nombre entier de 1 à 3, de préférence de 1.

6. Masses de moulage thermoplastiques ignifugées suivant l'une des revendications 1 à 4, dans lesquelles le composant C) présente une répartition des longueurs de fibres de verre avec une valeur de d₁₀ inférieure ou égale à 60 µm, une valeur de d₅₀ inférieure ou égale à 180 µm et une valeur de d₉₀ inférieure ou égale à 350 µm.

7. Utilisation des masses de moulage thermoplastiques ignifugées suivant l'une des revendications 1 à 6, pour la fabrication de fibres, de feuilles et de corps façonnés.
